# EUROPÄISCHE PATENTSCHRIFT

(11) **EP 2 369 315 B1**
(45) Veröffentlichungstag und Bekanntmachung des Hinweises auf die Patenterteilung: **02.09.2015**
(21) Anmeldenummer: 11002208.4
(22) Anmeldetag: 17.03.2011
(51) Int. Cl.: G01J 5/02, G01J 5/06, G01J 5/52, G01K 15/00

(54) **Kalibrierhülse zur Kalibrierung von Infrarotmessgeräten**
Calibration sleeve for calibrating infra-red measuring devices
Enveloppe de calibrage pour le calibrage d'appareils de mesure à infrarouge

(30) Priorität: 24.03.2010 DE 102010012516
(43) Veröffentlichungstag der Anmeldung: 28.09.2011
(73) Patentinhaber: SIKA Dr.Siebert & Kühn GmbH & Co. KG., 34260 Kaufungen (DE)
(72) Erfinder: Rehm-Gumbel, Michael, 34305 Niedenstein (DE)
(74) Vertreter: Walther, Walther & Hinz GbR

(56) Entgegenhaltungen:
- US-A- 3 487 216
- US-A- 3 631 708
- US-A1- 2008 192 797

## Beschreibung

Die Erfindung betrifft sowohl eine Kalibrierhülse zur Kalibrierung von Infrarotmessgeräten gemäß dem Oberbegriff des Anspruches 1, als auch einen Kalibrator zur Kalibrierung von Infrarotmessgeräten mit einer solchen Kalibrierhülse nach Anspruch 6.

Kalibratoren für Infrarotmessgeräte sind aus dem Stand der Technik bereits bekannt. Solche Kalibratoren umfassen eine Hülse oder eine Kalibrierhülse, die beheizt wird. In Abhängigkeit von der Temperatur in der Kalibrierhülse misst das Infrarotmessgerät über seinen Infrarotsensor die emittierte Strahlung im Messpunkt. Hierbei ist wesentlich, dass die Strahlung des Messpunktes unmittelbar auf den Infrarotsensor des Infrarotmessgerätes trifft. Das Auftreffen etwaiger Streustrahlung auf den Infrarotsensor soll vermieden werden. Insbesondere soll vermieden werden, dass Streustrahlung aus dem Bereich des Messpunktes durch beispielsweise Reflexion an den Wänden der Kalibrierhülse auf den Infrarotsensor trifft, oder aber dass Streustrahlung, die von außen in die Kalibrierhülse einläuft, durch Reflexion an den Wänden ebenfalls auf den Infrarotsensor trifft. Derartige Streustrahlung verhindert eine genaue Kalibrierung, da der Sensor dann tatsächlich nicht nur die Strahlung im Messpunkt aufnimmt, sondern, wie bereits ausgeführt, auch die Streustrahlung.

Aus dem Stand der Technik gemäß der US 2008/0192797 A1 ist ein Kalibrator bekannt, der eine hülsenförmige Öffnung aufweist, wobei sich an die hülsenförmige Öffnung in dem Kalibratorgehäuse ein kegelförmiger Boden anschließt. Im Bereich der Öffnung sind Hitzeschutzplatten vorgesehen, die beheizbar sind und die den Wärmeverlust an der Öffnung des Kalibrators begrenzen sollen.

Eine weitere Literaturstelle, nämlich die US 3,487,214 zeigt ebenfalls einen Kalibrator, wobei der Kalibrator eine Kalibrierhülse aufweist, die nach Art eines Doppelkonus ausgebildet ist. Das heißt, dass die Hülse einerseits zum Boden der Hülse konisch zulaufend ausgebildet ist, aber auch zur Öffnung der Hülse zu konisch zulaufend ausgebildet ist. Die Hülse selbst ist beheizbar.

Aus der US 3,631,708 A ist eine Kalibrierhülse zur Kalibrierung eines Infrarotmessgerätes bekannt, wobei die Kalibrierhülse einen Boden und auf ihrer Innenmantelfläche eine Mehrzahl von Flächenabschnitten aufweist, die winklig zur Mittellängsachse der Kalibrierhülse ausgerichtet sind. Hierbei sind zwei Flächenabschnitte unter Bildung eines satteldachartigen Körpers benachbart zueinander an der Innenmantelfläche der Kalibrierhülse angeordnet. Der Boden der Kalibrierhülse ist hierbei eben ausgebildet. Das heißt, aus dieser Literaturstelle ist eine Kalibrierhülse bekannt, bei der die Wandung der Kalibrierhülse nach Art eines Gewindes ausgebildet ist, jedoch eine Gewindesteigung. Auch mit dieser Kalibrierhülse ist eine genaue Kalibrierung nicht möglich, da der zu kalibrierende Sensor tatsächlich nicht nur die Strahlung im Messpunkt aufnimmt, sondern ebenfalls auch noch Streustrahlung.

Zur Vermeidung solcher Streustrahlung dienen bei einer Kalibrierhülse nach der Erfindung die Merkmale des Anspruches 1.

Weitere vorteilhafte Merkmale zu der Erfindung sind den Unteransprüchen zu entnehmen.

Hierbei weist die Kalibrierhülse auf ihrem Innenmantel eine Mehrzahl an Flächenabschnitten auf, die winklig zur Mittelsenkrechten der Kalibrierhülse ausgerichtet sind. Winklig zur Mittelsenkrechten oder auch zur Mittellängsachse der Kalibrierhülse angeordnete Flächenabschnitte bewirken bei geeigneter Ausrichtung der Flächen, dass die Strahlung, die entweder von außen in die Kalibrierhülse, oder die aus dem Bereich des Messpunktes von dem Boden der Kalibrierhülse reflektiert wird, sich durch Mehrfachreflexion an den Flächen am Messpunkt nicht aufteilt. Das heißt, es wird durch nahezu vollständige Reflexion der Streustrahlung in der Kalibrierhülse sicher gestellt, dass eine solche Strahlung nicht auf den Infrarotsensor des Infrarotmessgerätes trifft.

So ist insbesondere vorgesehen, dass die Flächenabschnitte am Innenmantel der Kalibrierhülse senkrecht zur Mittelsenkrechten an der Innenwandung der Kalibrierhülse umlaufen, also bei vertikal ausgerichteter Hülse horizontal umlaufen. Hieraus wird deutlich, dass die einzelnen Flächenabschnitte ähnlich einem Sägezahngewinde ohne Steigung auf der Innenmantelfläche vollständig umlaufen. In diesem Zusammenhang ist es insbesondere vorteilhaft, wenn zwei Flächenabschnitte unter Bildung eines satteldachartigen Körpers benachbart zueinander am Innenmantel der Kalibrierhülse angeordnet sind. Hieraus wird deutlich, dass aufgrund der satteldachartigen Ausbildung des die Flächenabschnitte bildenden Körpers sowohl in Richtung auf den Boden zu als auch in Richtung auf die Öffnung zu, im Bereich derer sich der Sensor des Infrarotmessgerätes befindet, sowohl von außen eintretende Strahlung, als auch vom Boden der Kalibrierhülse reflektierte Strahlung so oft an der Innenmantelfläche der Kalibrierhülse kontinuierlich reflektiert wird, bis sie absorbiert worden ist. Hierdurch ist sichergestellt, dass, wie bereits ausgeführt, die Strahlung nicht auf den Sensor des Infrarotmessgerätes gelangen kann.

Des Weiteren ist vorgesehen, dass die beiden den satteldachartigen Körper bildenden Flächenabschnitte im Querschnitt des satteldachattigen Körpers eine ungleiche Schenkellänge aufweisen. Das bedeutet, dass der eine Schenkel des satteldachartigen Körpers kürzer ist, als der andere Schenkel. Somit ergeben sich für die auf den satteldachartigen Körper auftreffenden Strahlen unterschiedliche Reflexionswinkel. Insbesondere vor dem Hintergrund, dass bei mehreren in Längsrichtung der Kalibrierhülse hintereinander an der Innenwandung der Kalibrierhülse angeordneten satteldachartigen Körpern der Winkel zwischen den Schenkeln des satteldachartigen Körpers über die Anzahl der satteldachartigen Körper zum Boden der Kalibrierhülse hin zunimmt, von außen in die Kalibrierhülse eindringende Streustrahlung und von dem Boden reflektierte Streustrahlung jeweils zuverlässig innerhalb der Kalibrierhülse gehalten wird, ohne dass die Gefahr besteht, dass diese Strahlung auf den Infrarotsensor trifft. Der Winkel ist allerdings vorzugsweise immer größer als 90°, zumal dies die Fertigung der Hülse vereinfacht.

Des Weiteren weist der Boden eine kegelförmige Ausnehmung auf, wobei die Spitze der kegelförmigen Ausnehmung sich in der Mittellängsachse der Kalibrierhülse befindet. Der Kegelwinkel beträgt insbesondere 120°. In der Spitze des Kegels befindet sich der Messpunkt. Von der Kegelmantelfläche emittierte Strahlung gelangt immer an die Innenmantelfläche oder Wandung der Kalibrierhülse, wo sie an den Flächenabschnitten der in Längsrichtung der Kalibrierhülse hintereinander angeordneten satteldachartigen umlaufenden Körper reflektiert wird und schließlich hinreichend absorbiert wird.

Bekannt ist in Bezug auf eine gewünschte hohe Strahlungsemission, dass der Reflexionsgrad des Materials zur Erzielung einer hohen Absorption niedrig sein soll. Insbesondere ist gewünscht, dass der Emissionsgrad nahe bei 1 liegt. Insofern ist vorgesehen, dass die Innenmantelfläche der Kalibrierhülse mit dem satteldachförmigen, umlaufenden Körpern aus einem Material mit poröser Oberfläche gebildet ist, z. B. einer Silizium-Carbid-Beschichtung. Eine solche Silizium-Carbid-Beschichtung kann porös ausgebildet sein, was bedeutet, dass aufgrund der damit verbundenen Oberflächenver-größerung die Absorbtionsleistung verbessert ist. Das heißt, mit einer porösen Oberfläche, beispielsweise einer porösen keramischen Oberfläche in Form einer Silizium-Carbid-Beschichtung, kann ein Emissionsgrad erreicht werden, der nahe bei 1 liegt. Vorteilhaft ist insbesondere, wenn die Silizium-Carbid-Beschichtung dunkel gehalten ist.

Die Kalibrierhülse weist auf ihrer Innenmantelfläche eine Mehrzahl an Flächenabschnitten auf, die winklig zur Mittelsenkrechten der Kalibrierhülse ausgerichtet sind, wobei zwei Flächenabschnitte unter Bildung eines satteldachartigen Körpers benachbart zueinander an der Innenmantelfläche der Kalibrierhülse angeordnet sind, wobei die beiden den satteldachartigen Körper bildenden Flächenabschnitte im Querschnitt des satteldachartigen Körpers eine ungleiche Schenkellänge aufweisen, wobei bei mehreren der hintereinander an der Innenmantelfläche der Kalibrierhülse angeordneten sattelartigen Körper der Winkel α zwischen den Flächenabschnitten des sattelartigen Körpers größer als 90° ist, und der Winkel α zum Boden der Kalibrierhülse zunimmt, wobei die Innenmantelfläche der Kalibrierhülse aus einem Material mit poröser Oberfläche gebildet ist, z. B. durch eine Silizium-Carbid-Beschichtung. Vorteilhaft ist diese Ausführungsform insofern, als hierdurch die Streustrahlung sehr weitgehend vermieden werden kann.

Gegenstand der Erfindung ist ebenfalls ein Kalibrator zur Kalibrierung von Infrarotmessgeräten, umfassend eine Kalibrierhülse der zuvor beschriebenen Art. Der Kalibrator besitzt hierbei zur Erwärmung der Kalibrierhülse eine Heizeinrichtung, wobei die Heizeinrichtung in der Lage ist, diese Kalibrierhülse, auf etwa 400 bis 450° zu erwärmen.

Anhand der Zeichnungen wird die Erfindung nachstehend beispielhaft näher erläutert.
- Fig. 1: zeigt den Kalibrator in einer schematischen Darstellung;
- Fig. 2: zeigt die Ausbildung der Kalibrierhülse mit dem angesetzten Boden;
- Fig. 3: zeigt eine Darstellung gemäß Fig. 2, bei der die Winkel der einzelnen Flächenabschnitte zur Mittelsenkrechten der Kalibrierhülse dargestellt sind.

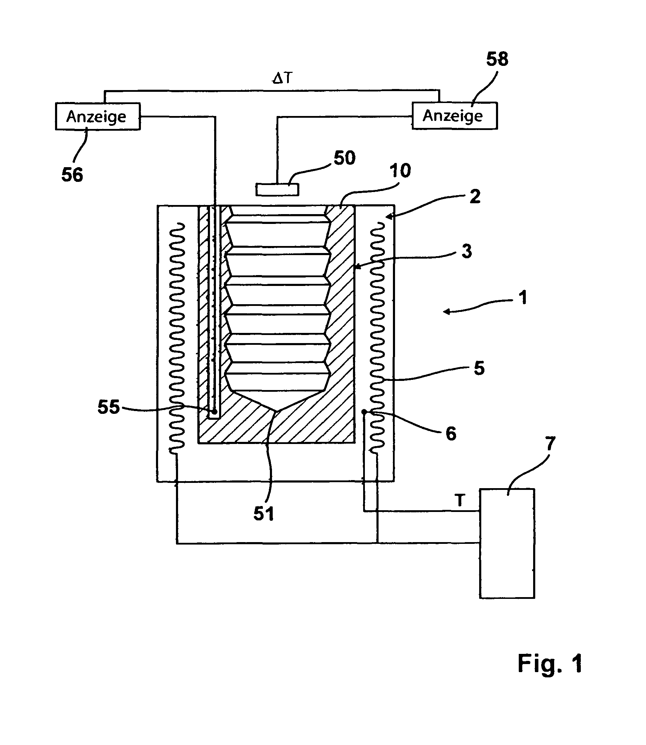

Der in Fig. 1 mit 1 bezeichnete Kalibrator umfasst die mit 2 bezeichnete Heizeinrichtung. Die Heizeinrichtung besitzt eine zylindrische Ausnehmung, in der sich die erfindungsgemäße Kalibrierhülse 10 befindet. Die mit 2 bezeichnete Heizeinrichtung zeigt eine Heizung 5, wobei die Heizung mit einem Regler 7 in Verbindung steht. Der Regler 7 misst durch einen Temperatursensor im Bereich des Bodens der Kalibrierhülse 10 an mindestens einem Messpunkt 6 die dort vorhandene Temperatur. Durch den Regler wird die Temperatur der Heizeinrichtung 2 und mithin auch die Temperatur der darin befindlichen Kalibrierhülse 10 geregelt.

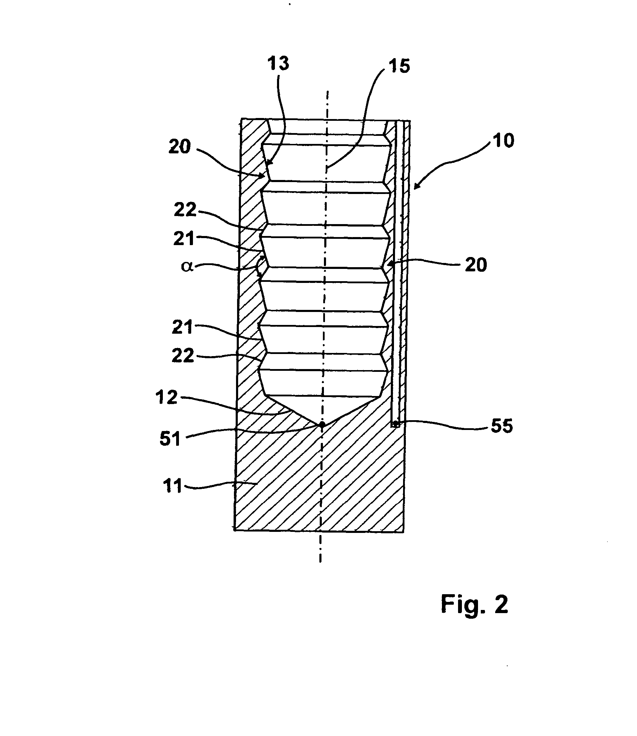

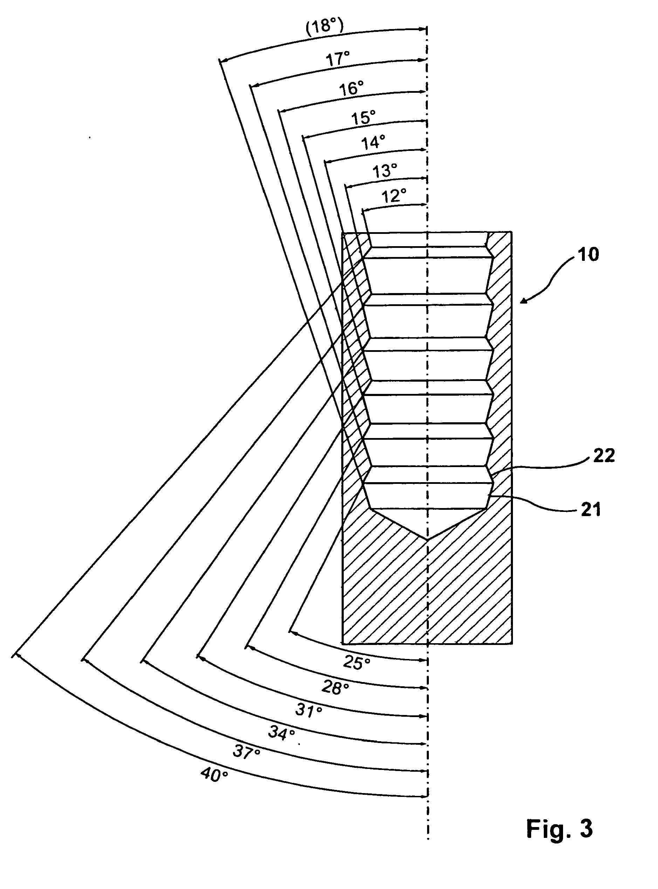

Gegenstand der Erfindung ist die mit 10 bezeichnete Kalibrierhülse gemäß den Fig. 2 und 3. Die Kalibrierhülse 10 zeigt den Boden 11, wobei der Boden 11 eine kegelförmige Spitze 12 mit einem Winkel von etwa 120° aufweist. Auf der Innenmantelfläche 13 der Kalibrierhülse 10 befinden sich hintereinander angeordnet, also in Längsrichtung der Kalibrierhülse hintereinander angeordnet, mehrere im Querschnitt satteldachartige Körper 20, die umlaufend senkrecht zur Mittellängsachse 15 verlaufend an der Innenmantelfläche oder Wandung 13 der Kalibrierhülse 10 angeordnet sind. Die beiden Flächen des satteldachartigen Körpers 20 sind mit 21 und 22 bezeichnet. Die beiden Flächenabschnitte 21, 22 stehen in einem Winkel α zueinander. Hierbei ist der den Flächenabschnitt 22 bildende Schenkel über die Länge der Kalibrierhülse immer kürzer als der den Flächenabschnitt 21 bildende Schenkel, Der Grund hierfür ist darin zu finden, dass bei Reflexion der Strahlung aus dem Kegel 12 des Bodens 11 heraus diese Strahlung immer in Richtung des Bodens zurückgeworfen wird. Gleiches gilt für die Strahlung, die von außen auf die Innenmantelfläche 13 und Flächenabschnitte 21 gelangt. Auch hier ist sicherzustellen, dass zum einen die von außen auftreffende Strahlung innerhalb der Kalibrierhülse verbleibt und in keinen Fall auf den Infrarotsensor treffen darf. Als besonders vorteilhaft hat sich herausgestellt, wenn, wie in Fig. 3 dargestellt, der Winkel α zwischen den Schenkeln des satteldachartigen Körpers zum Boden 11 der Kalibrierhülse hin zunimmt. Denn dadurch wird erreicht, dass zum einen von außen in die Kalibrierhülse eintretende Streustrahlung durch die verhältnismäßig gesehen flach verlaufenden Flächenabschnitte 21 weit auf die gegenüberliegende Wandung der Innenmantelfläche in Richtung des Bodens der Kalibrierhülse reflektiert wird. In Richtung auf den Boden zu, nimmt der Winkel α dieser Flächenabschnitte zu und beträgt am unteren Ende bereits etwa 158°. Er ist allerdings vorzugsweise immer größer als 90°. Auf diesen unteren Flächenabschnitt 21 auftreffende Strahlung wird weniger stell reflektiert, so dass insgesamt sichergestellt ist, dass von außen auftreffende Strahlung zunächst relativ weit in die Kalibrierhülse eindringt, um dann im Bereich des Bodens durch die unteren Flächenabschnitte 21 flacher reflektiert zu werden.

Gleiches gilt sinngemäß für von dem Kegel 12 im Boden reflektierte Strahlung. Auch hier gilt, dass die Winkellage der Flächenabschnitte 22 in Richtung auf die Öffnung zunimmt.

Zur Kalibrierung des Infrarotsensors 50 wird auf die Fig. 1 verwiesen. Fig. 1 zeigt schematisch die Messanordnung zur Kalibrierung des Messsensors 50. Der Messsensor 50 liegt zentrisch über der Kalibrierhülse 1. Der Fokus des Messsensors ist ausgerichtet auf den Messpunkt 51, der sich in der Spitze des Kegels 12 befindet.

Im Bereich des Bodens auf gleicher Höhe mit dem Messpunkt 51 befindet sich ein Temperaturmessgerät, beispielsweise ein Thermofühler 55, der auf einer Anzeige 56 die in Punkt 51 ermittelte Temperatur anzeigt. Der Messsensor 50 selbst ist mit einer weiteren Anzeige 58 versehen, wobei die Kallbrierung aufgrund der Temperaturdifferenz Δ T zwischen der Anzeige 56 und der Anzeige 58 erfolgt.

Die Innenwandung der Kalibrierhülse 1 ist mit einer Keramik beschichtet, wobei die Aufbringung der keramischen Schicht im Plasmasprühverfahren erfolgt. Vorteilhaft ist, wenn die Oberfläche porös ist, da sich dann, wie bereits ausgeführt, ein niedriger Reflexionsgrad bei hoher Absorption ergibt, der eine hohe Emission garantiert.

## Patentansprüche

1. Kalibrierhülse (10) zur Kalibrierung eines Infrarotmessgerätes (50) wobei die Kalibrierhülse einen Boden (11) und auf ihrer Innenmantelfläche (13) eine Mehrzahl an Flächenabschnitten (21, 22) aufweist, die winklig zur Mittellängsachse (15) der Kalibrierhülse ausgerichtet sind, wobei zwei Flächenabschnitte (21, 22) unter Bildung eines satteldachartigen Körpers (20) benachbart zueinander an der Innenmantelfläche (13) der Kalibrierhülse und quer zur Mittelachse umlaufend angeordnet sind,
**dadurch gekennzeichnet,**
**dass** die beiden den satteldachartigen Körper (20) bildenden Flächenabschnitte (21, 22) im Querschnitt des satteldachartigen Körpers eine ungleiche Schenkellänge aufweisen, wobei bei mehreren hintereinander an der Innenmantelfläche der Kalibrierhülse (10) angeordneten satteldachartigen Körper (20) der Winkel α zwischen den Flächenabschnitten (21, 22) des satteldachartigen Körpers größer 90 ° ist und der Winkel α bei mehreren der hintereinander an der Innenmantelfläche der Kalibrierhülse angeordneten satteldachartigen Körper zum Boden (11) der Kalibrierhülse (10) hin zunimmt,
wobei der Boden (11) eine kegelförmige Ausnehmung (12) aufweist, wobei die Spitze der kegelförmigen Ausnehmung sich in der Mittejsenkrechten (15) der Kalibrierhülse befindet, und wobei die Innenmantelfläche (13) der Kalibrierhülse (10) aus einem Material mit poröser Oberfläche gebildet ist.

2. Kalibrierhülse(10) nach Anspruch 1,
**dadurch gekennzeichnet,**
**dass** das Material zur Bildung der porösen Oberfläche als Silizium-Carbid-Beschichtung ausgebildet ist.

3. Kalibrierhülse(10) nach Anspruch 2,
**dadurch gekennzeichnet,**
**dass** die Silizium-Carbid-Beschichtung dunkel gehalten ist.

4. Kalibrator (1) zur Kalibrierung von Infrarotmessgeräten (50), umfassend ein Kalibrierhülse (10) gemäß einem oder mehreren der voranstehenden Ansprüche.

5. Kalibrator (1) nach Anspruch 4,
**dadurch gekennzeichnet,**
**dass** der Kalibrator (1) eine Heizeinrichtung (2) zur Erwärmung der Kalibrierhülse (10) aufweist.

## Claims

1. A calibration sleeve (10) for calibrating an infrared measuring device (50), wherein the calibration sleeve has a floor (11) and, on its inner lateral surface (13) a plurality of surface sections (21, 22) that are oriented at an angle relative to the centre longitudinal axis (15) of the calibration sleeve, wherein two surface sections (21, 22) are disposed on the inner lateral surface (13) of the calibration sleeve so that they are adjacent and run transversely around the centre axis, while forming a dual-pitched-roof-type body (20),
**characterized in that**
the two surface sections (21, 22) forming the dual-pitched-roof-type body (20) have an unequal leg length in a cross-section of the dual-pitched-roof-type body, wherein when several dual-pitched-roof-type bodies (20) are disposed one behind the other on the inner lateral surface of the calibration sleeve (10), the angle α between the surface sections (21, 22) of the dual-pitched-roof-type body is greater than 90° and the angle α of the several dual-pitched-roof-type bodies (20) disposed one behind the other on the inner lateral surface of the calibration sleeve (10) increases toward the floor (11) of the calibration sleeve (10),
wherein the floor (11) has a cone-shaped recess (12), wherein the point of the cone-shaped recess is located in the centre vertical axis (15) of the calibration sleeve and wherein the inner lateral surface (13) of the calibration sleeve (10) is made of a material with a porous surface.

2. The calibration sleeve (10) according to claim 1,
**characterized in that**
the material for forming the porous surface is formed as a silicon-carbide coating.

3. The calibration sleeve (10) according to claim 2,
**characterized in that**
the silicon-carbide coating is kept dark.

4. A calibrator (1) for calibrating infrared measuring devices (50), comprising a calibration sleeve (10) according to one or several of the afore-mentioned claims.

5. The calibrator (1) according to claim 4,
**characterized in that**
the calibrator (1) has a heating device (2) for heating up the calibration sleeve (10).

## Revendications

1. Enceinte de calibrage (10) pour le calibrage d'un appareil de mesure à rayonnement infrarouge (50) l'enceinte de calibrage comportant un fond (11) et, à la surface de son manteau intérieur (13) une pluralité de segments de surface (21, 22), qui sont orientés angulairement par rapport à l'axe longitudinal central (15) de l'enceinte de calibrage, deux segments de surface (21, 22) constituant un corps (20) en forme de toit à deux pans étant montés de façon adjacente contre la surface du manteau intérieur (13) de l'enceinte de calibrage et transversalement par rapport à l'axe central en le contournant,
**caractérisée en ce que**,
les deux segments de surface (21, 22) constituant le corps (20) en forme de toit à deux pans présentent, dans la section transversale du corps en forme de toit à deux pans, une longueur de jambage inégale, dans laquelle, pour plusieurs corps (20) disposés l'un derrière l'autre à la surface de son manteau intérieur de l'enceinte de calibrage (10), l'angle α entre les segments de surface (21, 22), du corps en forme de toit à deux pans est supérieur à 90° et l'angle α pour plusieurs corps disposés l'un derrière l'autre à la surface de son manteau intérieur de l'enceinte de calibrage (10) par rapport au fond (11) de l'enceinte de calibrage (10) augmente, dans laquelle le fond (11) comporte un évidement (12) de forme conique, dans laquelle la pointe de l'évidement de forme conique se situe dans la verticale centrale (15) de l'enceinte de calibrage, et dans laquelle la surface du manteau intérieur (13) de l'enceinte de calibrage (10) est réalisée en un matériau ayant une surface poreuse.

2. Enceinte de calibrage (10) selon la revendication 1,
**caractérisée en ce que,**
le matériau utilisé pour former la surface poreuse est constitué d'un revêtement en carbure de silicium.

3. Enceinte de calibrage (10) selon la revendication 2,
**caractérisée en ce que,**
le revêtement en carbure de silicium est maintenu sombre.

4. Calibrateur (1) pour le calibrage d'instruments de mesure à rayonnement infrarouge (50), comportant une enceinte de calibrage (10) selon une ou plusieurs des revendications précédentes.

5. Calibrateur (1) selon la revendication 4,
**caractérisé en ce que,**
le calibrateur (1) comporte une installation de chauffage (2) pour chauffer l'enceinte de calibrage (10).
